(19)

Europäisches Patentamt
European Patent Office
Office européen des brevets

(11) **EP 4 102 598 A1**

(12) **EUROPEAN PATENT APPLICATION**

(43) Date of publication:
**14.12.2022 Bulletin 2022/50**

(21) Application number: **22178516.5**

(22) Date of filing: **10.06.2022**

(51) International Patent Classification (IPC):
$H01M\ 4/36^{(2006.01)}$    $H01M\ 4/525^{(2010.01)}$
$H01M\ 4/62^{(2006.01)}$    $H01M\ 10/0525^{(2010.01)}$
$C01G\ 53/00^{(2006.01)}$    $H01M\ 4/02^{(2006.01)}$

(52) Cooperative Patent Classification (CPC):
**C01G 53/50; C01G 53/006; H01M 4/364;
H01M 4/525; H01M 4/624; H01M 4/625;
H01M 4/626; H01M 10/0525;** C01P 2004/50;
C01P 2004/61; H01M 2004/028

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.06.2021 KR 20210076088**

(71) Applicant: **SK On Co., Ltd.**
**Seoul 03188 (KR)**

(72) Inventors:
• **LEE, Yong Seok**
**34124 Daejeon (KR)**
• **KIM, Jae Ram**
**34124 Daejeon (KR)**

• **KIM, Jung Hwan**
**34124 Daejeon (KR)**
• **MIN, Jae Yun**
**34124 Daejeon (KR)**
• **BAE, Sang Won**
**34124 Daejeon (KR)**
• **LEE, Myung Ro**
**34124 Daejeon (KR)**
• **LEE, Jae Yeong**
**34124 Daejeon (KR)**
• **JANG, Hyun Joong**
**34124 Daejeon (KR)**

(74) Representative: **Stolmár & Partner**
**Patentanwälte PartG mbB**
**Blumenstraße 17**
**80331 München (DE)**

(54) **CATHODE COMPOSITION FOR LITHIUM SECONDARY BATTERY AND LITHIUM SECONDARY BATTERY FABRICATED USING THE SAME**

(57) A cathode composition for a lithium secondary battery includes a cathode active material that includes first cathode active material particles respectively having a secondary particle shape and second cathode active material particles respectively having a single particle shape, and a conductive material including a linear-type conductive material. A lithium secondary battery having enhanced life-span and resistance properties is provided.

EP 4 102 598 A1

**Description**

CROSS-REFERENCE TO RELATED APPLICATION

This application claims priority to Korean Patent Application No. 10-2021-0076088 filed on June 11, 2021 in the Korean Intellectual Property Office (KIPO), the entire disclosure of which is incorporated by reference herein.

BACKGROUND

1. Field

The present invention relates to a cathode composition for a lithium secondary battery and a lithium secondary battery also known as "lithium battery", "lithium-ion battery", "lithium-ion secondary battery", etc, fabricated using the same. More particularly, the present invention relates to a cathode composition for a lithium secondary battery including a lithium metal oxide-based active material and a lithium secondary battery fabricated using the same.

2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as an eco-friendly power source such as an electric automobile

The secondary battery includes, e.g., a lithium secondary battery, a nickelcadmium battery, a nickel-hydrogen battery, etc. The lithium secondary battery is highlighted due to high operational voltage and energy density per unit weight, a high charging rate, a compact dimension, etc.

For example, the lithium secondary battery may include an electrode assembly including a cathode, an anode and a separation layer (separator), and an electrolyte immersing the electrode assembly. The lithium secondary battery may further include an outer case having, e.g., a pouch shape.

A lithium metal oxide may be used as a cathode active material of the lithium secondary battery which may preferably provide high capacity, high power and enhanced life-span property. However, when the cathode active material is designed to have a high-power/capacity composition, the life-span property of the lithium secondary battery may be degraded. If the cathode active material is designed to have an enhanced life-span composition, electrical properties of the lithium secondary battery may be degraded.

For example, Korean Published Patent Application No. 10-2017-0093085 discloses a cathode active material including a transition metal compound and an ion adsorption binder, which may not provide sufficient power, capacity and life-span properties.

SUMMARY

It is an object of the present invention to provide an improved lithium secondary battery, in particular a lithium secondary battery improved with respect to capacity and/or energy density, especially within a limited unit volume, and/or life-span stability, especially at high temperatures, and/or storage stability and/or mechanical stability. The object is solved by the lithium secondary battery according to claim 1. Refinements of the invention are defined in the dependent claims and described in the description below. The features defined in the dependent claims and described for various embodiments of the invention may be combined with each other wherever this is technically possible.

According to an aspect of the present invention, there is provided a cathode composition for a lithium secondary battery having improved stability and electrochemical properties.

According to an aspect of the present invention, there is provided a lithium secondary battery having improved stability and electrochemical properties.

According to the present invention, a cathode composition for a lithium secondary battery includes a cathode active material that comprises first cathode active material particles respectively having a secondary particle shape and second cathode active material particles respectivley having a single particle shape; and a conductive material including a linear-type conductive material.

In some embodiments, a weight ratio of the first cathode active material particles and the second cathode active material particles may be in a range from 9:1 to 5:5.

In some embodiments, each of the first cathode active material particles and the second cathode active material particles may be represented by Chemical Formula 1:

[Chemical Formula 1] $Li_aNi_xM_{1-x}O_{2+y}$

In Chemical Formula 1, $0.9 \leq a \leq 1.2$, $0.5 \leq x \leq 0.99$, $-0.1 \leq y \leq 0.1$, and M may include at least one selected from Na, Mg, Ca, Y, Ti, Hf, V, Nb, Ta, Cr, Mo, W, Mn, Co, Fe, Cu, Ag, Zn, B, Al, Ga, Sn, Ba and Zr.

In some embodiments, in Chemical Formula 1, $0.8 \leq x \leq 0.95$.

In some embodiments, the single particle shape may include a monolithic shape in which 2 to 10 single particles are attached or adhered to each other.

In some embodiments, a peak intensity ratio of a Raman spectrum of the conductive material defined as Equation 1 may be in a range from 0.8 to 1.25:

$$[\text{Equation 1}]$$

$$\text{Peak intensity ratio of Raman spectrum} = I_D/I_G$$

In Equation 1, $I_D$ is a peak intensity of the conductive material in a wavelength range of 1,335 cm$^{-1}$ to 1,365 cm$^{-1}$ in the Raman spectrum, and $I_G$ is a peak intensity of the conductive material in a wavelength range of 1,565 cm$^{-1}$ to 1,600 cm$^{-1}$.

In some embodiments, a peak intensity ratio of the Raman spectrum may be in a range from 0.8 to 1.2.

In some embodiments, the linear-type conductive material may include a carbon nanotube.

In some embodiments, the conductive material may further include a dot-type conductive material.

In some embodiments, the dot-type conductive material may include graphite, carbon black, graphene, tin, tin oxide, titanium oxide, $LaSrCoO_3$ or $LaSrMnO_3$. These may be used alone or in a combination thereof.

In some embodiments, a length of the linear-type conductive material may be in a range from 10 $\mu$m to 55 $\mu$m.

According to embodiments of the present invention, a lithium secondary battery includes a cathode including a cathode current collector and a cathode active material layer formed by coating the cathode composition for a lithium secondary battery of claim 1 on at least one surface of the cathode current collector; and an anode facing the cathode.

A cathode composition according to embodiments of the present invention may include second cathode active material particles in the form of a single particle and a linear-type conductive material. High conductivity may be obtained by the linear-type conductive material while reducing a generation of cracks by employing the single particle. Thus, life-span and power properties may be improved while suppressing an increase of resistance due to an introduction of the single particle.

In exemplary embodiments, the cathode composition may include first cathode active material particles in the form of a secondary particle, and a weight ratio of the first cathode active material particles relative to the second cathode active material particles may be within a predetermined range. Accordingly, the life-span properties and high temperature stability of the secondary battery may be enhanced while achieving sufficient power and capacity properties.

In some embodiments, a peak intensity ratio ($I_D/I_G$) of a Raman spectrum of the conductive material may be in a range from 0.8 to 1.25. In this case, cracks in the conductive material caused by an excessive crystallization may be suppressed while also preventing deterioration of crystallinity due to an excessive amorphization of the conductive material. Accordingly, resistance of the secondary battery may be reduced and high stability may be implemented.

BRIEF DESCRIPTION OF THE DRAWINGS

FIG. 1 is an SEM (Scanning Electron Microscopy) image showing a first cathode active material particle in the form of a secondary particle in accordance with exemplary embodiments.

FIG. 2 is an SEM image showing second cathode active material particles in the form of a single particle in accordance with exemplary embodiments.

FIG. 3 is an SEM image showing a linear-type conductive material in accordance with exemplary embodiments.

FIG. 4 is an SEM image showing a dot-type conductive material in accordance with exemplary embodiments.

FIGS. 5 and 6 are a schematic plan view and a cross-sectional view, respectively, of a lithium secondary battery in accordance with exemplary embodiments.

DETAILED DESCRIPTION OF THE EMBODIMENTS

According to the present invention, a composition for a cathode including a single particle and a linear-type conductive material is provided. Further, a lithium secondary battery including a cathode that may be fabricated using the cathode composition is also provided.

Hereinafter, embodiments of the present invention will be described in detail with reference to specific experimental examples and the accompanying drawings. However, those skilled in the art will appreciate that such embodiments are provided to further understand the spirit of the present invention and do not limit subject matters to be protected as disclosed in the detailed description and appended claims.

In exemplary embodiments, a composition for a cathode of a lithium secondary battery (hereinafter, abbreviated as a cathode composition) may include a cathode active material including first cathode active material particles in the form of a secondary particle and second cathode active material particles in the form of a single particle, and a conductive material including a linear-type conductive material.

The conductive material may be included, e.g., to promote an electron movement between active material particles.

In some embodiments, the first cathode active material particles and the second cathode active material particles may be represented by Chemical Formula 1 below.

$$[\text{Chemical Formula 1}] \qquad Li_aNi_xM_{1-x}O_{2+y}$$

In Chemical Formula 1, $0.9 \le a \le 1.2$, $0.5 \le x \le 0.99$, $-0.1 \le y \le 0.1$, and M may include at least one selected from Na, Mg, Ca, Y, Ti, Zr, Hf, V, Nb, Ta, Cr, Mo, W, Mn, Co, Fe, Cu, Ag, Zn, B, Al, Ga, C, Si, Sn, Ba or Zr.

In some preferable embodiments, a molar ratio or a concentration of Ni represented as x in Chemical Formula 1 may be 0.8 or more. More preferably, the molar ratio or a concentration of Ni may exceed 0.8.

For example, in some embodiments, $0.8 \le x \le 0.95$. In this case, properties from high capacity and high power of the lithium secondary battery may be provided.

Ni may serve as a transition metal related to the power and capacity of the lithium secondary battery. Thus, as described above, the high-Ni composition may be employed to the first cathode active material particles and the second cathode active material particle, so that a lithium secondary battery or a cathode capable of providing high power and high capacity may be achieved.

However, as a content of Ni increases, long-term storage and life-span stability of the cathode or the secondary battery may be relatively deteriorated. However, according to exemplary embodiments, life-span stability and capacity retention may be improved by including Mn while maintaining electrical conductivity by including Co.

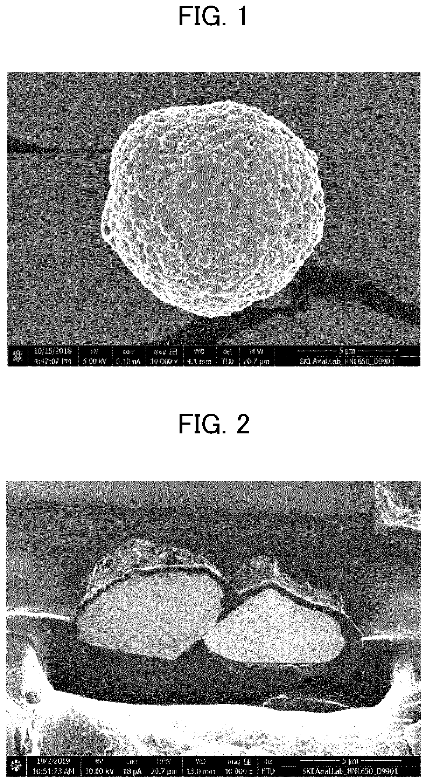

FIG. 1 is an SEM (Scanning Electron Microscopy) image showing a first cathode active material particle in the form of a secondary particle in accordance with exemplary embodiments.

Referring to FIG. 1, the first cathode active material particles may be in the form of a secondary particle (a secondary particle shape) formed by an agglomeration of primary particles. Thus, enhanced power may be implemented from the cathode. However, micro-cracks may be easily formed at an inside of the secondary particles during charging and discharging of the battery, and a side reaction between an electrolyte and the first cathode active material particles may be promoted to cause a gas generation at the inside of the battery.

Accordingly, when the first cathode active material particles are solely used as a cathode active material, the life-span properties during repeated charging and discharging of the secondary battery may be deteriorated.

FIG. 2 is an SEM image showing second cathode active material particles in the form of a single particle in accordance with exemplary embodiments.

Referring to FIG. 2, the cathode active material may include the second cathode active material particles in the form of a single particle (a single particle shape). In this case, the cracks of the particle may be reduced and a BET specific surface area reacting with the electrolyte may be decreased. Accordingly, the life-span properties of the secondary battery and the capacity retention during repeated charging and discharging may be improved.

The term "single particle shape" is used herein to exclude a secondary particle formed by aggregation of a plurality of primary particles. For example, the second cathode active material particles may substantially consist of particles of the single particle shape, and a secondary particle structure in which primary particles (e.g., the number of the primary particles in the secondary particle is greater than 10, 20 or more, 30 or more, 40 or more, 50 or more, etc.) are assembled or aggregated may be excluded.

The term "single particle shape" is not intended to exclude a monolithic shape in which, e.g., 2 to 10 particles of the single particle shape are attached or adjacent to each other.

In some embodiments, the second cathode active material particles may include a structure in which a plurality of primary particles are integrally merged together and are substantially converted into the single particle.

For example, the second cathode active material particles may have a granular or spherical single particle shape.

The above-described first cathode active material particles and the second cathode active material particles may be used together as a cathode active material, so that the life-span and stability of the battery at high temperature may be improved while providing enhanced power.

In some embodiments, a weight ratio of the first cathode active material particles and the second cathode active material particles included in the cathode active material may be in a range from 9:1 to 5:5, and preferably in a range from 8:2 to 7:3. In this case, the life-span and stability of the battery at high temperature may be improved while providing sufficient power and capacity of the secondary battery.

For example, the second cathode active material particles having the single particle shape may have a smaller BET specific surface area and a higher resistance than those of a cathode active material having the secondary particle shape. Accordingly, electrical conductivity of the secondary battery may be slightly lowered.

According to exemplary embodiments of the present invention, a conductive material included in the cathode composition may include a linear-type conductive material having improved electrical conductivity. Thus, the lowered electrical conductivity due to the introduction of the second cathode active material particles having the single particle shape may be compensated. Accordingly, a secondary battery having improved conductivity and high-temperature stability may be implemented.

In some embodiments, a peak intensity ratio in a Raman spectrum of the conductive material defined as Equation 1 below and obtained from a Raman spectroscopy analysis may be in a range from 0.8 to 1.25.

$$[\text{Equation 1}]$$

$$\text{Peak intensity ratio of Raman spectrum} = I_D/I_G$$

In Equation 1, $I_D$ may be a peak intensity of the conductive material in a wavelength range of 1,335 $cm^{-1}$ to 1,365 $cm^{-1}$ in the Raman spectrum (e.g., a D band of the Raman spectrum), and $I_G$ may be a peak intensity of the conductive material in a wavelength range of 1,565 $cm^{-1}$ to 1,600 $cm^{-1}$ in the Raman spectrum (e.g., a G band of the Raman spectrum).

Preferably, the peak intensity ratio of the Raman spectral spectrum may be in a range from 0.8 to 1.2, more preferably from 1.0 to 1.2. Within the above-described range of the peak intensity ratio, stability of the conductive material may be improved while having sufficient crystalline properties.

For example, the peak intensity ratio may indicate an amorphous degree of the conductive material. For example, the conductive material may have an amorphous structure as the peak intensity ratio increases, and may have a crystalline structure as the peak intensity ratio decreases.

For example, within the above-described range of the peak intensity ratio, cracks in the conductive material due to an excessive crystallization may be reduced while preventing deterioration of crystallinity due to an excessive amorphization of the conductive material. Accordingly, a resistance of the secondary battery may be reduced and enhanced stability may be achieved.

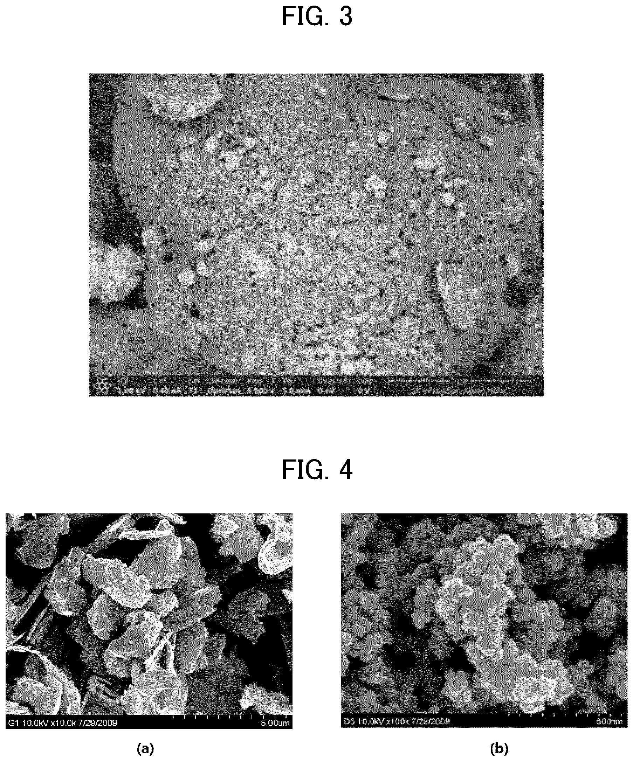

FIG. 3 is an SEM image showing a linear-type conductive material in accordance with exemplary embodiments.

The term "linear-type conductive material" used herein may refer to, e.g., a conductive material having an aspect ratio in a range from 2 to 20. The aspect ratio may mean a ratio of a length relative to a diameter of the linear-type conductive material.

Referring to FIG. 3, in some embodiments, the linear-type conductive material included in the conductive material may include a carbon nanotube (CNT). For example, the linear-type conductive materials may include a single-walled CNT (SWCNT), a double-walled CNT (DWCNT), a multi-walled CNT (MWCNT), or a rope CNT. These may be used alone or in a combination of two or more therefrom.

The carbon nanotube may be added as the conductive material to provide the cathode having, e.g., improved electrical conductivity, and high crystallinity and stability.

In some embodiments, a length of the linear-type conductive material may be in a range from 10 μm to 55 μm. In this case, the electron movement may be facilitated between the first and second cathode active material particles while preventing an excessive increase of a distance between the particles or an electrode volume. Accordingly, the electrical conductivity of the cathode may be improved while implementing a thin battery structure.

FIG. 4 is an SEM image showing a dot-type conductive material in accordance with exemplary embodiments. For example, each of (a) portion and (b) portion of FIG. 4 is showing different dot-type conductive materials in accordance with exemplary embodiments.

The term "dot-type conductive material" used herein may refer to, e.g., a conductive material having an aspect ratio in a range from 0.5 to 1.5, and may have a substantially spherical shape. The aspect ratio may refer to a ratio of a length relative to a diameter of the dot-type conductive material.

Referring to FIG. 4, in some embodiments, the above-described conductive material may further include the dot-type conductive material. In this case, a production cost may be reduced compared to that when only using the linear-type conductive material, while maintaining the effects of using the above-described linear-type conductive material. Accordingly, a productivity of the secondary battery may also be improved.

For example, a weight ratio of the linear-type conductive material and the dot-type conductive material included in the conductive material may be adjusted within a range from 1:9 to 9:1, preferably from 3:7 to 7:3. Within above-described range of the weight ratio, the reduction of the production cost and an electrode resistance may both be easily lowered.

In some embodiments, the dot-type conductive material may include a carbon-based conductive material such as graphite, carbon black, graphene, carbon nanotube, etc., and/or a metal-based conductive material including, e.g., tin, tin oxide, titanium oxide, a perovskite-based material such as, $LaSrCoO_3$ or $LaSrMnO_3$, etc.

According to exemplary embodiments, a lithium secondary battery including a cathode including the above-described cathode composition is provided.

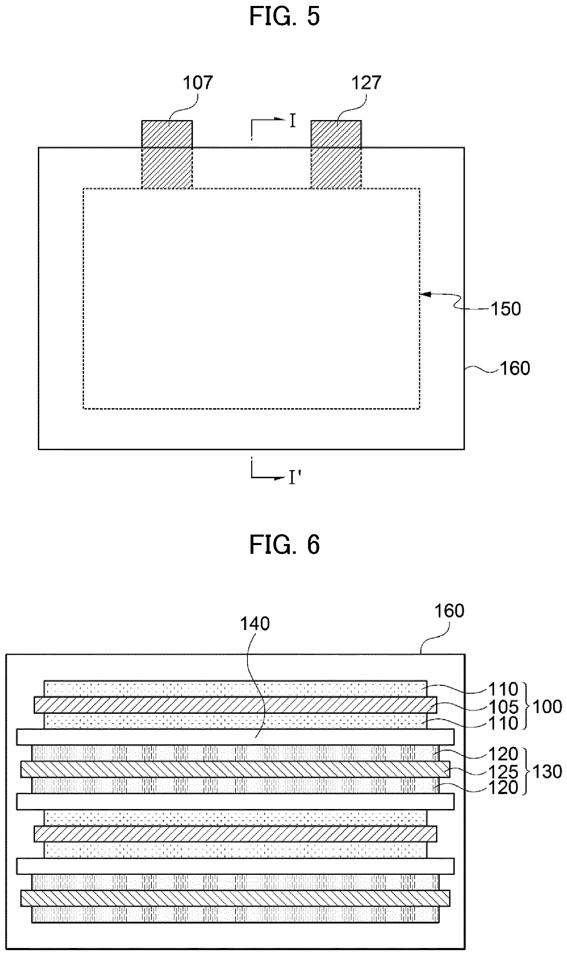

FIGS. 5 and 6 are a schematic plan view and a cross-sectional view, respectively, of a lithium secondary battery in accordance with exemplary embodiments.

Referring to FIGS. 5 and 6, a lithium secondary battery may include a cathode 100, an anode 130 and a separation layer 140.

The cathode 100 may include a cathode active material layer 110 formed by coating the cathode composition that may include the first cathode active material particle, the second cathode active material particles and the conductive material on at least one surface of a cathode current collector 105.

The cathode current collector 105 may include stainless-steel, nickel, aluminum, titanium, copper or an alloy thereof. Preferably, aluminum or an alloy thereof may be used.

For example, the cathode composition in the form of a slurry may be prepared by mixing and stirring the first cathode active material particles and the second cathode active material particles in a solvent with the conductive material including the linear-type conductive material, a binder, and a dispersive agent. The cathode composition may be coated on the cathode current collector 105, then dried and pressed to obtain the cathode 100.

The binder may include an organic based binder such as a polyvinylidene fluoride-hexafluoropropylene copolymer (PVDF-co-HFP), polyvinylidenefluoride (PVDF), polyacrylonitrile, polymethylmethacrylate, etc., or an aqueous based binder such as styrene-butadiene rubber (SBR) that may be used with a thickener such as carboxymethyl cellulose (CMC).

For example, a PVDF-based binder may be used as a cathode binder. In this case, an amount of the binder for forming the cathode active material layer 110 may be reduced, and an amount of the cathode active material may be relatively increased. Thus, capacity and power of the lithium secondary battery may be further improved.

The anode 130 may include an anode current collector 125 and an anode active material layer 120 formed by coating an anode active material on a surface of the anode current collector 125.

The anode active material may include a material commonly used in the related art which may be capable of adsorbing and ejecting lithium ions. For example, a carbon-based material such as a crystalline carbon, an amorphous carbon, a carbon complex or a carbon fiber, a lithium alloy, silicon (Si)-based compound, tin, etc., may be used.

The amorphous carbon may include a hard carbon, cokes (in particular petcoke and/or other carbon material obtained by heating coal or oil in the absence of air), a mesocarbon microbead (MCMB) fired at a temperature of 1500 °C or less, a mesophase pitch-based carbon fiber (MPCF), etc. The crystalline carbon may include a graphite-based material such as natural graphite, graphitized cokes, graphitized MCMB, graphitized MPCF, etc.

The lithium alloy may further include aluminum, zinc, bismuth, cadmium, antimony, silicon, lead, tin, gallium, indium, etc.

The anode current collector 125 may include, e.g., gold, stainless steel, nickel, aluminum, titanium, copper or an alloy thereof, preferably may include copper or a copper alloy.

In some embodiments, a slurry may be prepared by mixing and stirring the anode active material with a binder, a conductive material and/or a dispersive agent in a solvent. The slurry may be coated on the anode current collector, and then dried and pressed to form the anode 130.

The binder and the conductive material substantially the same as or similar to those mentioned above may be used in the anode 130. In some embodiments, the binder for forming the anode 130 may include an aqueous binder such as styrene-butadiene rubber (SBR), and carboxymethyl cellulose (CMC) may also be used as a thickener.

The separation layer 140 may be interposed between the cathode 100 and the anode 130. The separation layer 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, or the like. The separation layer 140 may also include a non-woven fabric formed from a glass fiber with a high melting point, a polyethylene terephthalate fiber, or the like.

In exemplary embodiments, an electrode cell may be defined by the cathode 100, the anode 130 and the separation layer 140, and a plurality of the electrode cells may be stacked to form the electrode assembly 150 that may have e.g., a jelly roll shape. For example, the electrode assembly 150 may be formed by winding, laminating or folding the separation layer 140.

The electrode assembly 150 may be accommodated together with an electrolyte in an outer case 160 to define the lithium secondary battery. In exemplary embodiments, a non-aqueous electrolyte may be used as the electrolyte.

The non-aqueous electrolyte may include a lithium salt and an organic solvent. The lithium salt may be represented by $Li^+X^-$, and an anion of the lithium salt $X^-$ may include, e.g., $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination of two or more therefrom.

As illustrated in FIG. 5, electrode tabs (a cathode tab and an anode tab) may protrude from the cathode current collector 105 and the anode current collector 125 included in each electrode cell to one side of the outer case 160. The electrode tabs may be welded together with the one side of the case 160 to be connected to an electrode lead (a cathode lead 107 and an anode lead 127) that may be extended or exposed to an outside of the outer case 160.

The lithium secondary battery may be manufactured in, e.g., a cylindrical shape using a can, a square shape, a pouch shape or a coin shape.

Hereinafter, preferred embodiments are proposed to more concretely describe the present invention. However, the following examples are only given for illustrating the present invention and those skilled in the related art will obviously understand that various alterations and modifications are possible within the scope and spirit of the present invention. Such alterations and modifications are duly included in the appended claims.

Example 1

(1) Preparation of first cathode active material particles

$NiSO_4$, $CoSO_4$ and $MnSO_4$ were mixed in a molar ratio of 0.88:0.06:0.06, respectively using distilled water from which dissolved oxygen was removed by bubbling with $N_2$ for 24 hours. The solution was put into a reactor at 50 °C, and NaOH and $NH_3H_2O$ were used as a precipitating agent and a chelating agent, respectively, to proceed with a co-precipitation reaction for 72 hours to obtain $Ni_{0.88}Co_{0.06}Mn_{0.06}(OH)_2$ as a transition metal precursor. The obtained precursor was dried at 100 °C for 12 hours and then re-dried at 120 °C for 10 hours.

Lithium hydroxide and the transition metal precursor were added in a ratio of 1.03:1 in a dry high-speed mixer and uniformly mixed for 20 minutes. The mixture was placed in a kiln, and then a temperature was raised to 950°C at a heating rate of 2°C/min and maintained at 950°C for 12 hours. Oxygen was passed continuously at a flow rate of 10 mL/min during the temperature raise and maintenance. After the sintering, natural cooling was performed to room temperature, and grinding and classification were performed to prepare first cathode active material particles having a composition of $LiNi_{0.88}Co_{0.06}Mn_{0.06}O_2$ in the form of a secondary particle.

(2) Preparation of second cathode active material particles

$Ni_{0.83}Co_{0.13}Mn_{0.04}(OH)_2$ as an NCM precursor and $Li_2CO_3$ and LiOH as lithium sources were mixed while being grinded for about 20 minutes. The mixed powder was sintered at a temperature of 700 °C to 1000 °C for 15 hours, and then pulverization, sieving and de-iron processes were performed to prepare second cathode active material particles having a composition of $LiNi_{0.83}Co_{0.13}Mn_{0.04}O_2$ in the form of a single particle (average particle diameter (D50): 5.6 $\mu$m).

(3) Fabrication of secondary battery

A cathode active material including the first cathode active material particles and the second cathode active material particles mixed in a weight ratio of 8:2, a linear-type conductive material (MWCNT) as a conductive material, and PVDF as a binder were mixed in a mass ratio of 94:3:3, respectively to form a cathode composition. The cathode composition was coated on an aluminum current collector, and then dried and pressed to form a cathode active material layer. Accordingly, a cathode having the cathode active material layer formed on the cathode current collector was obtained.

An average length of the MWCNTs was about 30 $\mu$m, and a BET specific surface area was 173 $m^2/g$.

88 wt% of natural graphite as an anode active material, 5 wt% of SiOx (0<x<2), 5 wt% of KS6 as a flake type conductive material, 1 wt% of styrene-butadiene rubber (SBR) as a binder, and 1 wt% of carboxymethyl cellulose (CMC) as a thickener to prepare an anode mixture. The anode mixture was coated on a copper substrate, dried and pressed to obtain an anode.

The cathode and the anode obtained as described above were notched with a proper size and stacked, and a separator (polyethylene, thickness: 15 $\mu$m) was interposed between the cathode and the anode to form an electrode cell. Each tab portion of the cathode and the anode was welded. The welded cathode/separator/anode assembly was inserted in a pouch, and three sides of the pouch except for an electrolyte injection side were sealed. The tab portions were also included in sealed portions. An electrolyte was injected through the electrolyte injection side, and then the electrolyte injection side was also sealed. Subsequently, the above structure was impregnated for 12 hours or more.

The electrolyte was prepared by preparing 1M LiPF$_6$ solution in a mixed solvent of EC/EMC/DEC (25/45/30; volume ratio), and then adding 1 wt% of vinylene carbonate, 0.5 wt% of 1,3-propensultone, and 0.5 wt% of lithium bis(oxalato) borate (LiBOB).

Examples 2 to 5

A lithium secondary battery was fabricated by the same method as that in Example 1, except that weight ratios of the first cathode active material particles and the second cathode active material particles were adjusted as shown in Table 1 below.

Example 6

A lithium secondary battery was fabricated by the same method as that in Example 1, except that carbon black as a dot-type conductive material was further added to have a weight ratio of 1:1 with MWCNT.

Examples 7 and 8

A lithium secondary battery was fabricated by the same method as that in Example 1, except that the average length of MWCNTs was changed as shown in Table 1 below.

Example 9

A lithium secondary battery was fabricated by the same method as that in Example 1, except that the mass ratio of the cathode active material, MWCNT and PVDF in the cathode mixture was adjusted to 94: 5:1.

Example 10

A lithium secondary battery was fabricated by the same method as that in Example 1, except that carbon black as a dot-type conductive material was further added to have a weight ratio of 8:2 with MWCNT.

Comparative Example 1

A lithium secondary battery was fabricated by the same method as that in Example 1, except that the first cathode active material particles were only used as the cathode active material without adding the second cathode active material particles, and carbon black was used as a conductive material instead of MWCNT.

Comparative Example 2

A lithium secondary battery was fabricated by the same method as that in Example 1, except that carbon black was used as a conductive material instead of MWCNT.

Experimental example

(1) Measurement of peak intensity ratio of Raman spectrum

Raman spectrums of the conductive materials were obtained using samples from the cathode prepared by the above-described Examples and Comparative Examples and a 532 nm laser Raman Spectroscopy. In the obtained Raman spectrum, a peak intensity ($I_D$) of the conductive material in a band having a wavelength of 1,335 cm$^{-1}$ to 1,365 cm$^{-1}$ (e.g., D band) and a peak intensity ($I_G$) of the conductive material in a band having a wavelength of 1,565 cm$^{-1}$ to 1,600 cm$^{-1}$ (e.g., G band) were measured. The measured peak intensities were applied to Equation 1 to calculate a peak intensity ratio of the Raman spectrum.

(2) Measurement of discharge DCIR

The lithium secondary batteries according to the above-described Examples and Comparative Examples were charged/discharged twice (SOC 100%) at 25 °C, 0.5 C, and CC-CV conditions, and charged again (0.5 C, CC-CV) and then 0.5C discharged to SOC 50%. Thereafter, a voltage was measured after standing for 30 minutes (a first voltage).
Then, a voltage (second voltage) was measured after i) 1C discharging for 10 seconds and standing for 40 seconds, ii) 0.75C charging for 10 seconds and standing for 40 seconds. A DCIR was measured using a difference between the first voltage and the second voltage.

(3) Measurement of energy density

Charging (CC-CV 0.33C 4.2V 0.05C SOC100 CUT-OFF) and discharging (CC 0.5C 2.5V SOC 0 CUT-OFF) of the lithium secondary batteries according to the above-described Examples and Comparative Examples were repeated twice. An energy density (Wh/L) was measured by multiplying a discharge capacity at the second cycle by an average discharge voltage and then dividing with an area.

(4) Measurement of cycle capacity retention

Charging (CC-CV 0.33C 4.2V 0.05C SOC96 CUT-OFF) and discharging (CC 0.5C 2.8V SOC2 CUT-OFF) of the lithium secondary battery according to the above-described Examples and Comparative Examples were repeated 700 times in a chamber at 45°C. A capacity retention was calculated as a percentage of a discharge capacity at the 700th cycle relative to a discharge capacity at the 1st cycle.

(5) Measurement of storage capacity retention

The storage capacity retention was calculated as a percentage of a discharge capacity after 20 weeks of storage in a chamber at 60° C of the lithium secondary batteries according to the above-described Examples and Comparative Examples relative to an initial discharge capacity.
The results are shown in Tables 1 and 2 below.

[Table 1]

| No. | weight ratio (first cathode active material particles : second cathode active material particles) | average length of linear-type conductive material ($\mu$m) | Addition of dot-type conductive material | peak intensity ratio of Raman spectrum ($I_D/I_G$) |
|---|---|---|---|---|
| Example 1 | 8:2 | 30 | X | 1.17 |
| Example 2 | 7:3 | 30 | X | 1.13 |
| Example 3 | 6:4 | 30 | X | 1.24 |
| Example 4 | 95:5 | 30 | X | 1.23 |
| Example 5 | 45:55 | 30 | X | 1.15 |
| Example 6 | 8:2 | 30 | O | 1.06 |
| Example 7 | 8:2 | 8 | X | 1.18 |
| Example 8 | 8:2 | 60 | X | 1.13 |
| Example 9 | 8:2 | 30 | X | 1.28 |
| Example 10 | 8:2 | 30 | O | 0.75 |
| Comparative Example 1 | 10:0 | - | O | 1.35 |
| Comparative Example 2 | 8:2 | - | O | 1.32 |

[Table 2]

| No. | DCIR (mΩ) | energy density (Wh/L) | cycle capacity retention (45°C) (%) | storage capacity retention (60°C) (%) |
|---|---|---|---|---|
| Example 1 | 1.34 | 719 | 86.3 | 93.2 |
| Example 2 | 1.38 | 717 | 88.0 | 93.6 |
| Example 3 | 1.41 | 716 | 89.2 | 93.8 |
| Example 4 | 1.29 | 721 | 84.5 | 92.9 |
| Example 5 | 1.51 | 708 | 90.7 | 94.2 |
| Example 6 | 1.35 | 718 | 86.8 | 93.3 |
| Example 7 | 1.39 | 718 | 85.9 | 93.0 |
| Example 8 | 1.40 | 715 | 86.2 | 93.1 |
| Example 9 | 1.41 | 717 | 86.1 | 93.2 |
| Example 10 | 1.40 | 718 | 85.9 | 92.9 |
| Comparative Example 1 | 1.31 | 729 | 83.3 | 92.7 |
| Comparative Example 2 | 1.40 | 719 | 86.2 | 93.1 |

Referring to Tables 1 and 2, in Examples including the second cathode active material particles having the single particle shape and the linear-type conductive material in the cathode composition, improved resistance properties were provided while maintaining or improving life-span and storage properties compared to those from Comparative Examples.

Specifically, in Example 1 where the single particle content the same as that of Comparative Example 2, a resistance was decreased while maintaining or improving capacity retentions.

In Example 4 where the content of the second cathode active material particles based on a total weight of the first cathode active material particles and the second cathode active material particles was less than 10 wt%, the capacity retentions were relatively reduced compared to those from Examples 1 to 3.

In Example 5 where the content of the second cathode active material particles based on the total weight of the first cathode active material particles and the second cathode active material particles exceeded 50 wt%, the resistance was relatively increased and the energy density was relatively decreased compared to those from Examples 1 to 3.

In Example 6 where the dot-type conductive material was added in a weight ratio of 1:1 with the linear conductive material, the resistance and life-span properties were maintained while reducing a production cost.

In Example 7 where the average length of the linear-type conductive material was less than 10 μm, and in Example 8 where the average length of the linear-type conductive material exceeded 55 μm, a distance between the cathode active material particles was not properly controlled, and the resistance became relatively greater than that from Example 1 having the same single particle content.

In Example 9 where the peak intensity ratio of the Raman spectrum exceeded 1.25, the resistance was slightly increased due to high amorphous properties.

In Example 10 where the peak intensity ratio was less than 0.8, the crystallinity was increased. Accordingly, partial particle cracks of the conductive material occurred and the resistance was slightly increased during the charging and discharging process.

**Claims**

1.    A cathode composition for a lithium secondary battery, comprising:

   a cathode active material that comprises first cathode active material particles respectively having a secondary particle shape and second cathode active material particles respectively having a single particle shape; and
   a conductive material including a linear-type conductive material.

2. The cathode composition for a lithium secondary battery of claim 1, wherein a weight ratio of the first cathode active material particles and the second cathode active material particles is from 9:1 to 5:5.

3. The cathode composition for a lithium secondary battery of claim 1, each of the first cathode active material particles and the second cathode active material particles are respectively represented by Chemical Formula 1:

[Chemical Formula 1]     $Li_aNi_xM_{1-x}O_{2+y}$

wherein, in Chemical Formula 1, $0.9 \leq a \leq 1.2$, $0.5 \leq x \leq 0.99$, $-0.1 \leq y \leq 0.1$, and M includes at least one selected from the group consisting of Na, Mg, Ca, Y, Ti, Hf, V, Nb, Ta, Cr, Mo, W, Mn, Co, Fe, Cu, Ag, Zn, B, Al, Ga, Sn, Ba and Zr.

4. The cathode composition for a lithium secondary battery of claim 3, wherein, in Chemical Formula 1, $0.8 \leq x \leq 0.95$.

5. The cathode composition for a lithium secondary battery of claim 1, wherein the single particle shape includes a monolithic shape in which 2 to 10 single particles are attached or adhered to each other.

6. The cathode composition for a lithium secondary battery of claim 1, wherein a peak intensity ratio of a Raman spectrum of the conductive material defined as Equation 1 is in a range from 0.8 to 1.25:

$$[\text{Equation 1}]$$

$$\text{Peak intensity ratio of Raman spectrum} = I_D/I_G$$

wherein, in Equation 1, $I_D$ is a peak intensity of the conductive material in a wavelength range of 1,335 cm$^{-1}$ to 1,365 cm$^{-1}$ in the Raman spectrum, and $I_G$ is a peak intensity of the conductive material in a wavelength range of 1,565 cm$^{-1}$ to 1,600 cm$^{-1}$.

7. The cathode composition for a lithium secondary battery of claim 6, wherein the peak intensity ratio of the Raman spectrum is in a range from 0.8 to 1.2.

8. The cathode composition for a lithium secondary battery of claim 1, wherein the linear-type conductive material comprises a carbon nanotube.

9. The cathode composition for a lithium secondary battery of claim 1, wherein the conductive material further comprises a dot-type conductive material.

10. The cathode composition for a lithium secondary battery of claim 9, wherein the dot-type conductive material comprises at least one selected from the group consisting of graphite, carbon black, graphene, tin, tin oxide, titanium oxide, $LaSrCoO_3$ and $LaSrMnO_3$.

11. The cathode composition for a lithium secondary battery of claim 1, wherein a length of the linear-type conductive material is in a range from 10 $\mu$m to 55 $\mu$m.

12. A lithium secondary battery, comprising:

a cathode comprising a cathode current collector and a cathode active material layer formed by coating the cathode composition for a lithium secondary battery of claim 1 on at least one surface of the cathode current collector; and
an anode facing the cathode.

# FIG. 1

# FIG. 2

FIG. 3

FIG. 4

(a)

(b)

# FIG. 5

# FIG. 6

Europäisches
Patentamt

European
Patent Office

Office européen
des brevets

# EUROPEAN SEARCH REPORT

Application Number

EP 22 17 8516

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 641 024 A1 (SK INNOVATION CO LTD [KR]) 22 April 2020 (2020-04-22) * paragraph [0070]; figures 1-6; examples 1-6 * | 1-3,5-12 | INV. H01M4/36 H01M4/525 H01M4/62 H01M10/0525 C01G53/00 |
| X | US 2019/393479 A1 (KIM SOO HO [KR] ET AL) 26 December 2019 (2019-12-26) * paragraph [0107]; claim 1; examples 1-9; table 1 * | 1-3,5-12 | ADD. H01M4/02 |
| X | EP 3 767 718 A1 (SUMITOMO CHEMICAL CO [JP]) 20 January 2021 (2021-01-20) * paragraphs [0113], [0114]; claims 1,6-8; figures 1A,2; examples 1-2 * | 1,3-12 | |
| X | EP 3 767 717 A1 (SUMITOMO CHEMICAL CO [JP]) 20 January 2021 (2021-01-20) * paragraphs [0131], [0132]; claims 1,5-7; figure 1A; examples 1-3 * | 1,3-12 | |
| A | DU ZHIJIA ET AL: "Three-dimensional conductive network formed by carbon nanotubes in aqueous processed NMC electrode", ELECTROCHIMICA ACTA, [Online] vol. 270, April 2018 (2018-04), pages 54-61, XP055972018, AMSTERDAM, NL ISSN: 0013-4686, DOI: 10.1016/j.electacta.2018.03.063 Retrieved from the Internet: URL:https://www.sciencedirect.com/science/article/pii/S0013468618305656> [retrieved on 2022-10-17] * 2. "Experimental"; 4. "Conclusion"; figure 2; table 1 * | 6-11 | TECHNICAL FIELDS SEARCHED (IPC) H01M C01G |

The present search report has been drawn up for all claims

| Place of search | Date of completion of the search | Examiner |
|---|---|---|
| Munich | 18 October 2022 | Bonneau, Sébastien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                   

& : member of the same patent family, corresponding document

EPO FORM 1503 03.82 (P04C01)

**EP 4 102 598 A1**

## ANNEX TO THE EUROPEAN SEARCH REPORT
## ON EUROPEAN PATENT APPLICATION NO.

EP 22 17 8516

18-10-2022

| Patent document cited in search report | | Publication date | Patent family member(s) | | Publication date |
|---|---|---|---|---|---|
| EP 3641024 | A1 | 22-04-2020 | CN | 111081993 A | 28-04-2020 |
| | | | EP | 3641024 A1 | 22-04-2020 |
| | | | KR | 20200043612 A | 28-04-2020 |
| | | | US | 2020127276 A1 | 23-04-2020 |
| US 2019393479 | A1 | 26-12-2019 | CN | 110620216 A | 27-12-2019 |
| | | | KR | 20190143088 A | 30-12-2019 |
| | | | US | 2019393479 A1 | 26-12-2019 |
| EP 3767718 | A1 | 20-01-2021 | CN | 111837266 A | 27-10-2020 |
| | | | EP | 3767718 A1 | 20-01-2021 |
| | | | JP | 6962838 B2 | 05-11-2021 |
| | | | JP | 2019160571 A | 19-09-2019 |
| | | | KR | 20200131237 A | 23-11-2020 |
| | | | US | 2021013508 A1 | 14-01-2021 |
| | | | WO | 2019177014 A1 | 19-09-2019 |
| EP 3767717 | A1 | 20-01-2021 | CN | 111837268 A | 27-10-2020 |
| | | | EP | 3767717 A1 | 20-01-2021 |
| | | | JP | 2019160573 A | 19-09-2019 |
| | | | KR | 20200130819 A | 20-11-2020 |
| | | | US | 2021083286 A1 | 18-03-2021 |
| | | | WO | 2019177032 A1 | 19-09-2019 |

For more details about this annex : see Official Journal of the European Patent Office, No. 12/82

**EP 4 102 598 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210076088
- KR 1020170093085